# EUROPÄISCHE PATENTSCHRIFT

(11) **EP 4 023 408 B1**
(45) Veröffentlichungstag und Bekanntmachung des Hinweises auf die Patenterteilung: **02.08.2023**
(21) Anmeldenummer: 21150349.5
(22) Anmeldetag: 05.01.2021
(51) Int. Cl.: B29C 44/34, B29C 44/50, B29C 48/385, B29B 7/74, B29B 7/88, B29B 7/42, B29B 7/82, B29B 7/84, B29C 48/00, B29C 48/76, B29C 48/87, B29C 48/92, B29K 21/00, B29K 23/00, B29K 25/00, B29K 55/02, B29K 67/00, B29K 69/00, B29K 75/00, B29K 77/00

(54) **VERFAHREN ZUR HERSTELLUNG EINES GESCHÄUMTEN EXTRUDATS**
METHOD FOR THE PRODUCTION OF A FOAMED EXTRUDATE
PROCÉDÉ DE FABRICATION D'UN EXTRUDAT EXPANSÉ

(43) Veröffentlichungstag der Anmeldung: 06.07.2022
(73) Patentinhaber: Promix Solutions AG, 8406 Winterthur (CH)
(72) Erfinder: Schlummer, Christian, 8400 Winterthur (CH); Willa, Christoph, 8406 Winterthur (CH); Heusser, Rolf, 8400 Winterthur (CH)
(74) Vertreter: Herrmann, Johanna

(56) Entgegenhaltungen:
- EP-A1- 2 641 717
- EP-A1- 2 865 503
- EP-A1- 3 100 843
- EP-A2- 3 647 527

## Beschreibung

Die vorliegende Erfindung betrifft ein Verfahren zur Herstellung eines feinzelligen geschäumten Kunststoffes oder Kunststoffextrudats oder einer funktional vergleichbaren Masse oder eines Extrudates enthaltend Biopolymere oder Naturstoffe, beispielsweise Holz, Pflanzen, Holzbestandteile oder Pfanzenbestandteile. Nachfolgend werden die Ausgangsstoffe für solche Extrudate der Einfachheit halber als schmelzbare Ausgangsstoffe bezeichnet. Geschäumte Kunststoffextrudate werden gemäss vorbekannten Verfahren durch chemisches Schäumen oder physikalisches Schäumen im Extrusionsverfahren erhalten. Dabei wird der Kunststoff aufgeschmolzen und ein Treibmittel beigegeben. Beim chemischen Schäumen werden chemische Substanzen beigegeben, die sich unter Wärmeeinfluss zersetzen und ein Gas freisetzen, das dann in der Kunststoffschmelze zu einer Aufschäumreaktion führt. Beim physikalischen Schäumen wird der Kunststoffschmelze ein Gas oder eine leichtsiedende Flüssigkeit wie z.B. CO₂, Stickstoff, Butan zugegeben. Zusätzlich werden zum Erzeugen einer feinzelligen Schaumstruktur chemische Substanzen, sogenannte aktive Nukleierungsmittel, zugegeben, die unter Wärmeeinfluss geringe Mengen an Gasen freisetzen, die in Kombination mit dem physikalischen Treibmittel aufschäumen, sodass eine feinzellige Schaumstruktur erhalten wird. Die flüssigen oder gasförmigen physikalischen Treibmittel werden mittels einer Pumpe oder einer anderen Fördereinrichtung unter Druck in den aufgeschmolzenen Kunststoff zugegeben. Bei den chemischen Treibmitteln und bei den aktiven Nukleierungsmitteln handelt es sich um chemische Substanzen, die als Feststoff vorliegen. So können diese chemischen Substanzen zum Beispiel Azodicarbonamide, Natriumbicarbonat, Zitronensäure und Zitronensäurederivate enthalten. Unter dem Begriff aktive Substanz wird, wenn dieser Begriff auf Substanzen, beispielsweise Nukleierungsmittel, bezogen ist, eine Substanz verstanden, die ein Gas abspaltet. Insbesondere wird der Begriff «aktives Nukleierungsmittel» dazu verwendet, um eine Abgrenzung zu passiven Nukleierungsmitteln zu ermöglichen. Passive Nukleierungsmittel bestehen aus einer Vielzahl kleiner Partikel, an oder mit welchen keine chemische Reaktion abläuft.

Diese chemischen Substanzen werden in konventionellen Extrusionsanlagen dem Kunststoffgranulat bevorzugt im Einzugsbereich des Extruders als Granulat oder Pulver beigebeben. Granulate werden dabei bevorzugt, da diese weniger stauben und einfacher mittels gravimetrischer oder volumetrischer Dosiervorrichtungen dosiert werden können. Ein derartiges Granulat kann einen sogenannten Masterbatch umfassen. Ein Masterbatch enthält typischerweise 30-70 Gewichts% chemische Substanzen und ein Trägermaterial, welches unter anderem ein Wachs oder Kunststoff sein kann. Ein Masterbatch wird in einem vorgelagerten Prozess, zum Beispiel einem Kompoundierprozess, hergestellt. Üblicherweise wird der Masterbatch einem als Granulat oder Pulver vorliegenden Kunststoff in einer Konzentration von 0.1 bis 4 Gewichtsprozent zugegeben. Die chemische Reaktion erfolgt dann im Extruder nach dem Aufschmelzen des Kunststoffs und des Masterbatch, sobald die Schmelzetemperatur im Extruder die für die chemische Reaktion erforderliche Reaktionstemperatur erreicht hat.

Es hat sich gezeigt, dass mit den vorgängig beschriebenen chemischen und physikalischen Schäumverfahren nicht immer zufriedenstellende feinzellige Schäume erreicht werden können. Als feinzelliger Schaum wird ein Schaum mit einer mittleren Zellgrösse von unter 200 Mikrometern verstanden. Dabei hat sich speziell die Zugabe der chemischen Substanzen im Einlassbereich des Extruders teilweise als nachteilig erwiesen. Wenn ein Extrusionsverfahren eine Entgasung umfasst, können chemische Substanzen und/oder durch die Reaktion der chemischen Substanzen freigesetzte Gase entweichen. Eine Entgasung wird vorgesehen, wenn der Kunststoffschmelze im Extruder flüchtige Substanzen oder Feuchtigkeit entzogen werden soll. Die Entgasung erfolgt teilweise durch Anlegen eines Vakuums. Wenn der Kunststoffschmelze chemische Substanzen zugegeben werden, die für das chemische Schäumen oder die aktive Nukleierung erforderlich sind, können auch diese Substanzen respektive durch die Reaktion der chemischen Substanzen freigesetzte Gase durch eine für die Entgasung vorgesehene Entgasungsöffnung entweichen.

Die Zugabe von chemischen Substanzen im Einlassbereich des Extruders hat sich auch als nachteilig erwiesen, wenn es durch zu tiefe Schmelzetemperaturen nicht oder nicht vollständig zu einer erwünschten chemischen Reaktion kommt. Dies ist insbesondere dann der Fall, wenn die Reaktionstemperatur höher als die Schmelzetemperatur ist oder wenn die Schmelzetemperatur nur über einen kurzen Zeitraum über der Reaktionstemperatur liegt. Ein Grund für tiefe Schmelzetemperaturen kann sein, dass sich die Schmelze bei höheren Temperaturen zersetzt.

### Stand der Technik

Im Dokument DE 3722050 A1 wird ein Extrusionsverfahren zur Herstellung einer geschäumten oder schäumbaren Kunststoffschmelze offenbart. Bei diesem Extrusionsverfahren kommen wahlweise chemische Treibmittel, physikalische Treibmittel und aktive Nukleierungsmittel, die als Porenbildner bezeichnet werden, zum Einsatz. Dabei wird ein Porenbildner und ein chemisches Treibmittel einem ersten Extruder nicht im Einzugsbereich, sondern stromabwärts in einer zusätzlichen Zuführöffnung zugegeben. Die Zugabe erfolgt als Granulat oder als Pulver in einen drucklosen Bereich des ersten Extruders. Dieses Verfahren hat den grossen Nachteil, dass die Verweilzeit der chemischen Substanzen im Extruder verkürzt ist, weil die chemischen Substanzen nicht im Einlassbereich des Extruders zugegeben werden, sondern erst kurz vor dem Austritt der Kunststoffschmelze in der Nähe des Austrittsendes des Extruders. Folglich wird die Verweilzeit der chemischen Substanzen im Extruder reduziert, was zur Folge hat, dass die Schmelzetemperatur allenfalls kurzfristig potentiell über der Reaktionstemperatur der chemischen Substanzen liegt, zumal die Schmelzetemperatur gegen das Austrittsende eines Extruders beim Schäumen typischerweise wieder reduziert wird.

Das vorbekannte Verfahren ist auch ungeeignet zum Schäumen von temperatursensitiven Extrudaten, bei welchem die Schmelzetemperatur nicht oder nur ungenügend lange der Reaktionstemperatur der chemischen Substanzen entspricht. Wird die Schmelzetemperatur im letzten Bereich des Extruders sehr hoch gehalten, um trotz kurzer Verweilzeit der chemischen Substanzen einen genügenden Fortschritt der chemischen Reaktion zu erzielen, so besteht die Gefahr, dass es unmittelbar beim Kontakt zwischen der heissen Kunststoffschmelze und dem Granulat oder Pulver zu einer chemischen Reaktion kommen kann und damit durch die chemische Reaktion entstehendes Gas mindestens zum Teil über die Dosierstelle entweichen kann.

Zudem sind zur Zugabe des Granulats oder Pulvers auf diese Weise spezielle Dosierschnecken erforderlich, die im Bereich der Zuführöffnung drucklos sind, damit die Granulate und Pulver zugegeben werden können, ohne dass Kunststoffschmelze aus der Zuführöffnung herausgedrückt wird.

Zur weiteren Mischung und Kühlung der Kunststoffschmelze wird gemäss DE 3722050 A1 vorgeschlagen, die mit dem Porenbildner und dem chemischen Treibmittel beladene Kunststoffschmelze im Anschluss an den ersten Extruder einem zweiten Extruder zuzuführen. Theoretisch könnten optimale Bedingungen zur Reaktion der chemischen Substanzen im zweiten Extruder eingestellt werden. Allerdings könnte der zweite Extruder bei einer derartigen Modifikation nicht mehr die Funktion des Kühlextruders erfüllen, mittels welchem die Temperatur der Kunststoffschmelze auf eine für den Schäumvorgang ideale Temperatur abgesenkt wird. Zudem ist die Verwendung von zwei Extrudern sehr teuer und prozesstechnisch komplex, wenn eine ausreichende Reaktion der chemischen Substanzen erforderlich ist.

Ein weiteres Verfahren zur Herstellung eines geschäumten Extrudats ist aus dem Dokument EP 2 865 503 A1 bekannt.

### Aufgabe der Erfindung

Aufgabe der Erfindung ist es, ein Verfahren bereitzustellen, mittels welchem feinzellige Schäume im Extrusionsverfahren auch unter ungünstigen Prozessbedingungen hergestellt werden können.

### Beschreibung der Erfindung

Die Lösung der Aufgabe der Erfindung erfolgt durch ein Verfahren gemäss Anspruch 1. Vorteilhafte Varianten des Verfahrens sind Gegenstand der Ansprüche 2 bis 15.

Wenn der Begriff "beispielsweise" in der nachfolgenden Beschreibung verwendet wird, bezieht sich dieser Begriff auf Ausführungsbeispiele und/oder Ausführungsformen, was nicht notwendigerweise als eine bevorzugtere Anwendung der Lehre der Erfindung zu verstehen ist. In ähnlicher Weise sind die Begriffe "vorzugsweise", "bevorzugt" zu verstehen, indem sie sich auf ein Beispiel aus einer Menge von Ausführungsbeispielen und/oder Ausführungsformen beziehen, was nicht notwendigerweise als eine bevorzugte Anwendung der Lehre der Erfindung zu verstehen ist. Dementsprechend können sich die Begriffe "beispielsweise", "vorzugsweise" oder "bevorzugt" auf eine Mehrzahl von Ausführungsbeispielen und/oder Ausführungsformen beziehen.

Die nachfolgende detaillierte Beschreibung enthält verschiedene Ausführungsbeispiele für das erfindungsgemässe Verfahren. Die Beschreibung eines bestimmten Verfahrens ist nur als beispielhaft anzusehen. In der Beschreibung und den Ansprüchen werden die Begriffe "enthalten", "umfassen", "aufweisen" als "enthalten, aber nicht beschränkt auf" interpretiert.

Ein Verfahren zur Herstellung eines geschäumten Extrudats enthält eine Hauptschmelzvorrichtung und eine Nebenschmelzvorrichtung, wobei in der Hauptschmelzvorrichtung eine erste Schmelze erzeugt wird, wobei in der Nebenschmelzvorrichtung eine zweite Schmelze aus einem schmelzbaren Ausgangsstoff erzeugt wird, wobei dem schmelzbaren Ausgangsstoff zumindest ein reaktives Additiv aus der Gruppe bestehend aus einem chemischen Treibmittel, einem physikalischen Treibmittel und einem aktiven Nukleierungsmittel zugegeben wird oder das reaktive Additiv im schmelzbaren Ausgangsstoff enthalten ist, wobei der schmelzbare Ausgangsstoff und das reaktive Additiv in der Nebenschmelzvorrichtung zu der zweiten Schmelze aufgeschmolzen werden, sodass in der Nebenschmelzvorrichtung eine das reaktive Additiv enthaltende additivhaltige zweite Schmelze erhalten wird, welche der in der Hauptschmelzvorrichtung erzeugten ersten Schmelze zugemischt wird. Insbesondere ist mittels der Konzentration des reaktiven Additivs in der zweiten Schmelze ein zweites Schmelzetemperaturprofil in der zweiten Schmelze in der Nebenschmelzvorrichtung einstellbar, welches unabhängig von einem ersten Schmelzetemperaturprofil der ersten Schmelze der Hauptschmelzvorrichtung eingestellt werden kann. Insbesondere ist mittels des Durchmessers oder der Länge der Nebenschmelzvorrichtung eine zweite Verweilzeit der zweiten Schmelze in der Nebenschmelzvorrichtung einstellbar, welche unabhängig von einer ersten Verweilzeit der ersten Schmelze der Hauptschmelzvorrichtung eingestellt werden kann.

Gemäss eines Ausführungsbeispiels ist die Hauptschmelzvorrichtung als Hauptextruder ausgebildet. Gemäss eines Ausführungsbeispiels ist die Nebenschmelzvorrichtung als Nebenextruder ausgebildet. Gemäss eines Ausführungsbeispiels ist die Nebenschmelzvorrichtung als Einschneckenextruder ausgebildet.

Gemäss eines Ausführungsbeispiels wird der schmelzbare Ausgangsstoff der Nebenschmelzvorrichtung über eine Aufgabevorrichtung als Pulver oder und als Granulat zugegeben. Gemäss eines Ausführungsbeispiels wird zumindest eines der reaktiven Additive der Nebenschmelzvorrichtung als Pulver oder und als Granulat zugegeben. Gemäss eines Ausführungsbeispiels ist das Granulat, welches das reaktive Additiv enthält, als Masterbatch ausgebildet. Gemäss eines Ausführungsbeispiels wird dem Masterbatch kein zusätzlicher schmelzbarer Ausgangsstoff mehr hinzugefügt. Der Masterbatch kann insbesondere das reaktive Additiv enthalten. Der Masterbatch kann einen Kunststoff enthalten. Der Masterbatch kann der in der Nebenschmelzvorrichtung befindlichen zweiten Schmelze in unverdünnter Form oder zusätzlich mit weiterem Kunststoffgranulat oder Kunststoffpulver zugegeben werden.

Gemäss eines Ausführungsbeispiels beträgt das Dosierverhältnis der zweiten Schmelze zur ersten Schmelze weniger als 1 zu 10. Gemäss eines Ausführungsbeispiels beträgt das Dosierverhältnis weniger als 1:20. Gemäss eines Ausführungsbeispiels beträgt das Dosierverhältnis weniger als 1:50. Somit ist es mittels des erfindungsgemässen Verfahrens möglich, die Verarbeitung reaktiver Additive für unterschiedliche Volumenströme an Schmelzen bereitzustellen. Die Einarbeitung von reaktiven Additiven wird somit durch die Anwendung des erfindungsgemässen Verfahrens skalierbar.

Gemäss eines Ausführungsbeispiels beträgt die gesamte Menge an reaktiven Additiven der zweiten Schmelze im Verhältnis zur gesamten Kunststoffmenge der zweiten Schmelze 10% bis 80 Gew %.

Gemäss eines Ausführungsbeispiels kann die Dosiermenge des reaktiven Additivs durch die Drehzahl der Nebenschmelzvorrichtung gesteuert werden. Insbesondere ist die Drehzahl einer in der Nebenschmelzvorrichtung angeordneten drehbaren Fördervorrichtung durch eine durchsatzabhängige Stellgrösse der Hauptschmelzvorrichtung geregelt. Die durchsatzabhängige Stellgrösse kann die Drehzahl einer in der Hauptschmelzvorrichtung angeordneten drehbaren Hauptfördervorrichtung umfassen oder eine Drehzahl einer Schmelzepumpe, die in der aus der Hauptschmelzvorrichtung austretenden ersten Schmelze angeordnet ist, geregelt werden.

Gemäss eines Ausführungsbeispiels wird additivhaltige zweite Schmelze der ersten Schmelze in der Hauptschmelzvorrichtung oder stromabwärts der Hauptschmelzvorrichtung zugegeben.

Gemäss eines Ausführungsbeispiels enthält die Hauptschmelzvorrichtung eine Entgasungsöffnung, wobei die additivhaltige zweite Schmelze stromabwärts der Entgasungsöffnung zugegeben wird.

Gemäss eines Ausführungsbeispiels erfolgt eine chemische Reaktion des reaktiven Additivs teilweise vor der Zugabe in die erste Schmelze.

Gemäss eines Ausführungsbeispiels erreicht die Temperatur der zweiten Schmelze oder der additivhaltigen zweiten Schmelze in der Nebenschmelzvorrichtung zumindest in einem Abschnitt der Nebenschmelzvorrichtung mehr als 160 Grad Celsius. Gemäss eines Ausführungsbeispiels erreicht die Temperatur der zweiten Schmelze oder der additivhaltigen zweiten Schmelze in der Nebenschmelzvorrichtung zumindest in einem Abschnitt der Nebenschmelzvorrichtung mehr als 180 Grad Celsius. Gemäss eines Ausführungsbeispiels erreicht die Temperatur der zweiten Schmelze oder der additivhaltigen zweiten Schmelze in der Nebenschmelzvorrichtung zumindest in einem Abschnitt der Nebenschmelzvorrichtung mehr als 200 Grad Celsius.

Gemäss eines Ausführungsbeispiels ist die Temperatur der zweiten Schmelze oder der additivhaltigen zweiten Schmelze höher als die Temperatur der ersten Schmelze, bevor die erste und die zweite additivhaltige Schmelze gemischt werden.

Gemäss eines Ausführungsbeispiels ist zumindest ein Element aus einer Gruppe bestehend aus einer ersten Mischvorrichtung und einer ersten Kühlvorrichtung stromabwärts des Hauptschmelzvorrichtung angeordnet.

Gemäss eines Ausführungsbeispiels ist zumindest ein Element aus einer Gruppe bestehend aus einer zweiten Mischvorrichtung und einer zweiten Kühlvorrichtung zwischen der Nebenschmelzvorrichtung und der Zugabe in die erste Schmelze angeordnet, sodass die additivhaltige zweite Schmelze gemischt oder gekühlt werden kann, bevor sie mit der ersten Schmelze in Kontakt gebracht wird.

Um eine optimale Wirkung des reaktiven Additivs zu erreichen, muss dieses möglichst vollständig reagiert haben und sich abgespaltenes Gas und Zersetzungsprodukte möglichst gleichmässig in der additivhaltigen zweiten Schmelze verteilt haben. Insbesondere, um eine optimale Wirkung der chemischen Treibmittel und aktiven Nukleierungsmittel zu erreichen, müssen diese möglichst vollständig reagiert haben und sich das abgespaltene Gas und die Zersetzungsprodukte möglichst gleichmässig in der additivhaltigen zweiten Schmelze verteilt haben. Dies wird erreicht, indem das reaktive Additiv für eine möglichst lange Zeitdauer Temperaturen oberhalb der Reaktionstemperatur des reaktiven Additivs ausgesetzt wird.

Daher wird das reaktive Additiv gemäss eines Ausführungsbeispiels dem schmelzbaren Ausgangsstoff in einer Aufgabevorrichtung der Nebenschmelzvorrichtung beispielsweise als Granulat, als Masterbatch oder als Pulver beigebeben. Dabei wird das reaktive Additiv optimal mit dem schmelzbaren Ausgangsstoff vorvermischt und weist eine maximale Verweilzeit in der Nebenschmelzvorrichtung auf. Zudem ist die Zugabe des reaktiven Additivs in einer Aufgabevorrichtung sehr einfach. Die Zugabe des reaktiven Additivs kann zusammen mit dem schmelzbaren Ausgangsstoff über eine für die Feststoffe geeignete Dosiervorrichtung erfolgen. Durch das reaktive Additiv wird die zweite Schmelze als schäumbare oder geschäumte zweite Schmelze ausgebildet.

Gemäss eines Ausführungsbeispiels umfasst das Verfahren zur Herstellung eines geschäumten Extrudats auch ein physikalisches Schäumen. Zur Durchführung des physikalischen Schäumens wird gemäss dieses Ausführungsbeispiels dem Extrudat mindestens ein physikalisches Treibmittel zudosiert, welches der additivhaltigen zweiten Schmelze in der Nebenschmelzvorrichtung, in der Hauptschmelzvorrichtung oder stromabwärts der Hauptschmelzvorrichtung zudosiert werden kann.

Chemische Treibmittel oder aktive Nukleierungsmittel können Gase über endotherme oder exotherme Reaktionen freisetzen. Chemische Treibmittel und aktive Nukleierungsmittel mit endothermem Reaktionsverlauf können beispielsweise Natriumbicarbonat, Zitronensäure und Zitronensäurederivate enthalten. Chemische Treibmittel und aktive Nukleierungsmittel mit exothermem Reaktionsverlauf können beispielsweise Azodicarbonamide enthalten.

Die schmelzbaren Ausgangsstoffe können ein Element bestehend aus der Gruppe der Kunststoffe und Naturstoffe enthalten.

Das Verfahren kann insbesondere für einen Kunststoff zum Einsatz kommen, beispielsweise für zumindest einen Kunststoff aus der Gruppe bestehend aus PET, PP, PE, PS, PC, PA, TPE, TPU, ABS, PVC.

Das Verfahren kann insbesondere für Naturstoffe zum Einsatz kommen, beispielsweise für zumindest einen Naturstoff aus der Gruppe bestehend aus einem Biopolymer, Holz, einer Pflanze, einem Holzbestandteil oder einem Pflanzenbestandteil.

Das Verfahren kann auch für Gemische aus Kunststoffen und Naturstoffen zum Einsatz kommen.

Erfindungsgemäss wird somit ein reaktives Additiv aus der Gruppe bestehend aus einem chemischen Treibmittel und einem aktiven Nukleierungsmittel in konzentrierter Form mit einer als Nebenschmelzvorrichtung dienenden Schmelzvorrichtung in einer zweiten Schmelze aufgeschmolzen und als treibmittelhaltige Schmelze in eine erste Schmelze, auch als Hauptstrom bezeichnet, in eine Hauptschmelzvorrichtung zudosiert. Der Hauptstrom ist eine Schmelze, die in einer Hauptschmelzvorrichtung erhalten wird. Auf diese Weise kann reaktives Additiv nach einer eventuellen Entgasung der ersten Schmelze zudosiert werden. Prozessbedingungen wie Temperatur und Verweilzeit können in der Nebenschmelzvorrichtung unabhängig von der Hauptschmelzvorrichtung eingestellt werden. Daher kann auch die Verweilzeit und potenzielle Reaktionszeit des reaktiven Additivs über die Grösse der Nebenschmelzvorrichtung und oder die Konzentration der chemischen Substanzen im Verhältnis zur zweiten Schmelze eingestellt werden. Die Temperaturführung in der Nebenschmelzvorrichtung kann unabhängig von der Temperaturführung in der Hauptschmelzvorrichtung erfolgen. Daher können zu jedem Zeitpunkt ideale Bedingungen zur vollständigen Reaktion der chemischen Treibmittel und oder der aktiven Nukleierungsmittel eingehalten werden und ein Entweichen allfälliger entstehender Treibgase kann verhindert werden.

### Kurzbeschreibung der Zeichnungen

Nachfolgend wird das erfindungsgemässe Verfahren anhand einiger Ausführungsbeispiele dargestellt. Es zeigen
Fig. 1 ein Schema eines Verfahrens nach einem ersten Ausführungsbeispiel,
Fig. 2 ein Schema eines Verfahrens nach einem zweiten Ausführungsbeispiel,
Fig. 3 ein Schema eines Verfahrens nach einem dritten Ausführungsbeispiel.

### Detaillierte Beschreibung der Zeichnungen

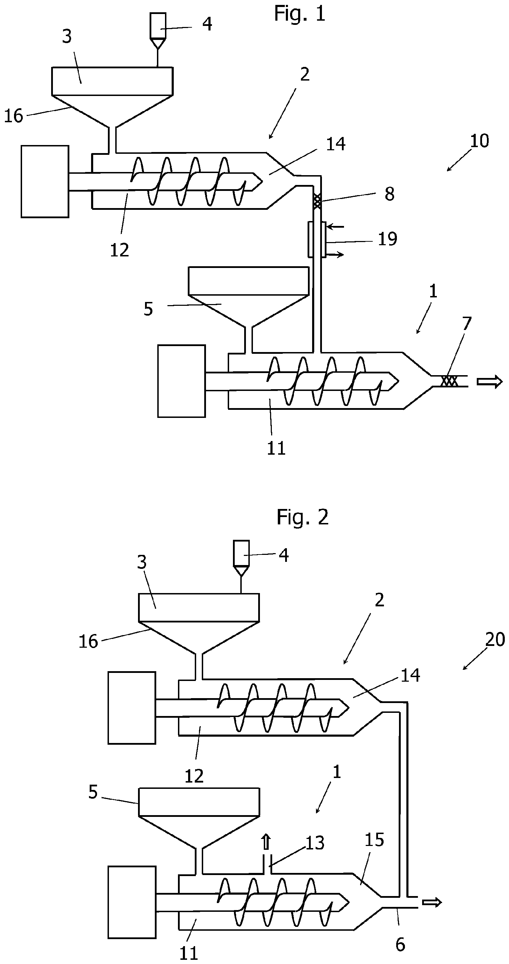

Fig. 1 zeigt eine Vorrichtung 10 zur Durchführung eines Verfahrens zur Herstellung eines geschäumten Extrudats gemäss eines ersten Ausführungsbeispiels. Die Vorrichtung 10 enthält eine Hauptschmelzvorrichtung 1 und eine Nebenschmelzvorrichtung 2, wobei in der Hauptschmelzvorrichtung 1 eine erste Schmelze 11 erzeugt wird. In der Nebenschmelzvorrichtung 2 wird eine zweite Schmelze 12 aus einem schmelzbaren Ausgangsstoff 3 erzeugt. Der schmelzbare Ausgangsstoff 3 kann als in Pulver oder Granulat vorliegen. Dem schmelzbaren Ausgangsstoff 3 wird ein reaktives Additiv 4 zugegeben. Das reaktive Additiv 4 kann zum Beispiel als Pulver, als Granulat oder als Masterbatch vorliegen. Ein Masterbatch kann auch ohne weiteren schmelzbaren Ausgangsstoff 3 verwendet werden. Der schmelzbare Ausgangsstoff 3 wird zusammen mit dem reaktiven Additiv 4 in der Nebenschmelzvorrichtung 2 zu der zweiten Schmelze 12 aufgeschmolzen, sodass in der Nebenschmelzvorrichtung 2 eine das reaktive Additiv 4 enthaltende additivhaltige zweite Schmelze 14 erhalten wird, welche der in der Hauptschmelzvorrichtung 1 erzeugten ersten Schmelze 11 zugemischt wird. Die Hauptschmelzvorrichtung 1 kann ebenfalls mit einem schmelzbaren Ausgangsstoff 5, der als Feststoff, beispielsweise als Pulver oder Granulat, vorliegt, beschickt werden. Gemäss eines nicht dargestellten Ausführungsbeispiels wird der Hauptschmelzvorrichtung 1 eine Schmelze anstelle eines Feststoffs zugeführt.

Beispielsweise ist die Hauptschmelzvorrichtung 1 als Hauptextruder ausgebildet. Beispielsweise ist die Nebenschmelzvorrichtung 2 als Nebenextruder, insbesondere als ein Einschneckenextruder, ausgebildet. Aufgrund der einfachen Bauweise ist die Nebenschmelzvorrichtung 2 in der Konfiguration als Einschneckenextruder kostengünstig erhältlich, zudem kann eine Nebenschmelzvorrichtung 2 einfach an eine Hauptschmelzvorrichtung 1 angeschlossen werden oder nachgerüstet werden.

Gemäss eines Ausführungsbeispiels wird zumindest eines der reaktiven Additive 4 der Nebenschmelzvorrichtung 2 als Pulver oder als Granulat zugegeben. Das reaktive Additiv 4 kann dem schmelzbaren Ausgangsstoff 3 bereits in der Aufgabevorrichtung 16 zugegeben werden. Wenn mittels der Nebenschmelzvorrichtung 2 ein Masterbatch verarbeitet wird, kann das reaktive Additiv 4 im Masterbatch enthalten sein.

Gemäss eines Ausführungsbeispiels beträgt das Dosierverhältnis der zweiten Schmelze 12 zur ersten Schmelze 11 weniger als 1 zu 10. Gemäss eines Ausführungsbeispiels beträgt das Dosierverhältnis weniger als 1:20. Gemäss eines Ausführungsbeispiels beträgt das Dosierverhältnis weniger als 1:50.

Gemäss des in Fig. 1 dargestellten Ausführungsbeispiels wird die additivhaltige zweite Schmelze 14 der ersten Schmelze 11 in der Hauptschmelzvorrichtung 1 zugegeben. Insbesondere kann eine chemische Reaktion des reaktiven Additivs 4 teilweise in der Nebenschmelzvorrichtung 2 erfolgen. Insbesondere kann die additivhaltige zweite Schmelze 14 zumindest in einem Abschnitt der Nebenschmelzvorrichtung 2 eine höhere Temperatur als 160 Grad Celsius erreichen. Gemäss eines Ausführungsbeispiels kann die additivhaltige zweite Schmelze 14 zumindest in einem Abschnitt der Nebenschmelzvorrichtung 2 eine höhere Temperatur als 180 Grad Celsius erreichen. Gemäss eines Ausführungsbeispiels kann die additivhaltige zweite Schmelze 14 zumindest in einem Abschnitt der Nebenschmelzvorrichtung 2 eine höhere Temperatur als 200 Grad Celsius erreichen. Die Temperatur der additivhaltigen zweiten Schmelze 14 kann höher als die Temperatur der ersten Schmelze 11 sein, bevor die erste Schmelze 11 und die zweite Schmelze 12 oder die additivhaltige zweite Schmelze 14 gemischt werden.

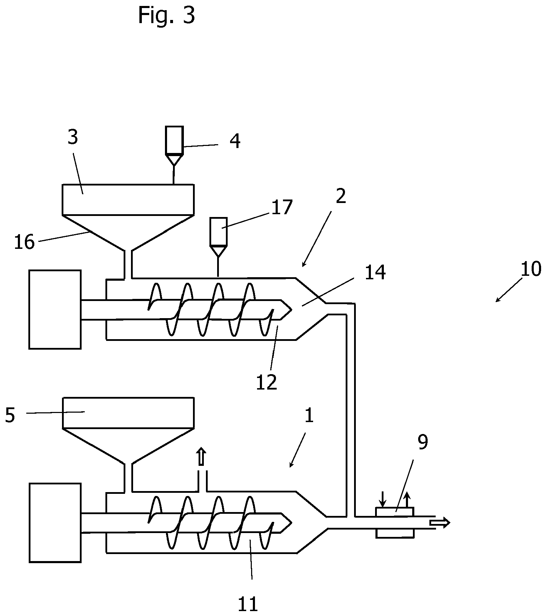

Gemäss des vorliegenden Ausführungsbeispiels ist eine optionale erste Mischvorrichtung 7 stromabwärts der Hauptschmelzvorrichtung 1 angeordnet. Optional ist zusätzlich eine erste Kühlvorrichtung 9 stromabwärts der Hauptschmelzvorrichtung 1 angeordnet. Die erste Kühlvorrichtung 9 ist exemplarisch in Fig. 3 gezeigt.

Gemäss des in Fig. 1 dargestellten Ausführungsbeispiels sind eine optionale zweite Mischvorrichtung 8 und eine optionale zweite Kühlvorrichtung 19 stromabwärts der Nebenschmelzvorrichtung 2 angeordnet, sodass die additivhaltige zweite Schmelze gemischt oder gekühlt werden kann, bevor sie mit der ersten Schmelze 11 in Kontakt gebracht wird.

Fig. 2 zeigt eine Vorrichtung 20 zur Durchführung eines Verfahrens zur Herstellung eines geschäumten Extrudats gemäss eines zweiten Ausführungsbeispiels. Für gleiche oder gleichwirkende Elemente werden dieselben Bezugszeichen wie in Fig. 1 verwendet.

Die Vorrichtung 20 enthält eine Hauptschmelzvorrichtung 1 und eine Nebenschmelzvorrichtung 2, wobei in der Hauptschmelzvorrichtung 1 eine erste Schmelze 11 erzeugt wird. In der Nebenschmelzvorrichtung 2 wird eine zweite Schmelze 12 aus einem schmelzbaren Ausgangsstoff 3, der beispielsweise als Pulver oder als Granulat vorliegt, erzeugt. Dem schmelzbaren Ausgangsstoff 3 wird ein reaktives Additiv 4 zugegeben oder das reaktive Additiv 4 ist im schmelzbaren Ausgangsstoff 3 schon enthalten. Der schmelzbare Ausgangsstoff 3 wird zusammen mit dem Additiv 4 in der Nebenschmelzvorrichtung 2 zu der zweiten Schmelze 12 aufgeschmolzen, sodass in der Nebenschmelzvorrichtung 2 eine das reaktive Additiv 4 enthaltende additivhaltige zweite Schmelze 14 erhalten wird, welche der in der Hauptschmelzvorrichtung 1 erzeugten ersten Schmelze 11 zugemischt wird. Die Hauptschmelzvorrichtung 1 kann ebenfalls mit einem schmelzbaren Ausgangsstoff 5, der als Feststoff vorliegt, insbesondere als Pulver oder Granulat, beschickt werden. Gemäss eines nicht dargestellten Ausführungsbeispiels kann der Hauptschmelzvorrichtung 1 eine Schmelze anstelle eines Feststoffs zugeführt werden.

Gemäss eines Ausführungsbeispiels ist die Nebenschmelzvorrichtung 2 als Nebenextruder, insbesondere als ein Einschneckenextruder, ausgebildet. Aufgrund der einfachen Bauweise ist die Nebenschmelzvorrichtung 2 in der Konfiguration als Einschneckenextruder kostengünstig erhältlich, zudem kann diese Nebenschmelzvorrichtung 2 einfach an eine bestehende Hauptschmelzvorrichtung 1 angeschlossen werden oder nachgerüstet werden.

Gemäss eines Ausführungsbeispiels wird zumindest das reaktive Additiv 4 der Nebenschmelzvorrichtung 2 als Pulver, als Granulat oder als Masterbatch zugegeben. Das reaktive Additiv 4 kann dem schmelzbaren Ausgangsstoff 3 bereits in der Aufgabevorrichtung 16 zugegeben werden. Wenn mittels der Nebenschmelzvorrichtung 2 ein Masterbatch verarbeitet wird, kann das reaktive Additiv 4 im Masterbatch enthalten sein.

Gemäss eines Ausführungsbeispiels beträgt das Dosierverhältnis der zweiten Schmelze 12 zur ersten Schmelze 11 weniger als 1 zu 10. Gemäss eines Ausführungsbeispiels beträgt das Dosierverhältnis weniger als 1:20. Gemäss eines Ausführungsbeispiels beträgt das Dosierverhältnis weniger als 1:50.

Insbesondere kann eine chemische Reaktion des reaktiven Additivs 4 teilweise in der Nebenschmelzvorrichtung 2 erfolgen. Insbesondere kann die additivhaltige zweite Schmelze 14 zumindest in einem Abschnitt der Nebenschmelzvorrichtung 2 eine höhere Temperatur als 160 Grad Celsius erreichen. Gemäss eines Ausführungsbeispiels kann die additivhaltige zweite Schmelze 14 zumindest in einem Abschnitt der Nebenschmelzvorrichtung 2 eine höhere Temperatur als 180 Grad Celsius erreichen. Gemäss eines Ausführungsbeispiels kann die additivhaltige zweite Schmelze 14 zumindest in einem Abschnitt der Nebenschmelzvorrichtung 2 eine höhere Temperatur als 200 Grad Celsius erreichen. Die Temperatur der additivhaltigen zweiten Schmelze 14 kann höher als die Temperatur der ersten Schmelze 11 sein, bevor die erste Schmelze 11 und die additivhaltige zweite Schmelze 14 gemischt werden.

Gemäss des in Fig. 2 dargestellten Ausführungsbeispiels wird die additivhaltige zweite Schmelze 14 der ersten Schmelze 11 stromabwärts der Hauptschmelzvorrichtung 1 zugegeben. Gemäss dieses Ausführungsbeispiels enthält die Hauptschmelzvorrichtung 1 eine Entgasungsöffnung 13, wobei die das reaktive Additiv 4 enthaltende additivhaltige zweite Schmelze 14 stromabwärts der Entgasungsöffnung 13 zugegeben wird. Gemäss dieses Ausführungsbeispiels wird die additivhaltige zweite Schmelze 14 stromabwärts des Austrittsendes 15 der Hauptschmelzvorrichtung 1 zugegeben, beispielsweise in eine Leitung 6.

Die additivhaltige zweite Schmelze 14 kann gemäss eines nicht dargestellten Ausführungsbeispiels auch in einen Bereich der Hauptschmelzvorrichtung 1 zugegeben werden, der zwischen der Entgasungsöffnung und dem Austrittsende 15 liegt. Mischvorrichtungen 7, 8 oder eine Kühlvorrichtung 9 können wie im ersten Ausführungsbeispiel vorgesehen werden. Nach der Hauptschmelzvorrichtung kann eine Mischvorrichtung und oder eine Kühlvorrichtung folgen.

Fig. 3 zeigt eine Vorrichtung 10 zur Durchführung eines Verfahrens zur Herstellung eines geschäumten Extrudats gemäss eines dritten Ausführungsbeispiels. Die Vorrichtung 10 enthält eine Hauptschmelzvorrichtung 1 und eine Nebenschmelzvorrichtung 2, wobei in der Hauptschmelzvorrichtung 1 eine erste Schmelze 11 erzeugt wird. In der Nebenschmelzvorrichtung 2 wird eine zweite Schmelze 12 aus einem schmelzbaren Ausgangsstoff 3 erzeugt. Der schmelzbare Ausgangsstoff kann als in Pulver oder Granulat vorliegen. Dem schmelzbaren Ausgangsstoff 3 wird ein reaktives Additiv 4 zugegeben. Das reaktive Additiv 4 kann zum Beispiel als Pulver, als Granulat oder als Masterbatch vorliegen. Ein Masterbatch kann auch ohne weiteren schmelzbaren Ausgangsstoff 3 verwendet werden. Der Kunststoff 3 wird zusammen mit dem reaktiven Additiv 4 und einem physikalischen Treibmittel 17 in der Nebenschmelzvorrichtung 2 zu der zweiten Schmelze 12 aufgeschmolzen, sodass in der Nebenschmelzvorrichtung 2 eine das reaktive Additiv 4 und das physikalische Treibmittel 17 enthaltende additivhaltige zweite Schmelze 14 erhalten wird, welche der in der Hauptschmelzvorrichtung 1 erzeugten ersten Schmelze 11 zugemischt wird. Die Hauptschmelzvorrichtung 1 kann ebenfalls mit einem schmelzbaren Ausgangsstoff 5, der als Feststoff, beispielsweise als Pulver oder Granulat, vorliegt, beschickt werden. Gemäss eines nicht dargestellten Ausführungsbeispiels wird der Hauptschmelzvorrichtung 1 eine Schmelze anstelle eines Feststoffs zugeführt.

Beispielsweise ist die Hauptschmelzvorrichtung 1 als Hauptextruder ausgebildet. Beispielsweise ist die Nebenschmelzvorrichtung 2 als Nebenextruder, insbesondere als ein Einschneckenextruder, ausgebildet. Aufgrund der einfachen Bauweise ist die Nebenschmelzvorrichtung 2 in der Konfiguration als Einschneckenextruder kostengünstig erhältlich, zudem kann eine Nebenschmelzvorrichtung 2 einfach an eine Hauptschmelzvorrichtung 1 angeschlossen werden oder nachgerüstet werden.

Gemäss eines Ausführungsbeispiels wird zumindest eines der reaktiven Additive 4 der Nebenschmelzvorrichtung 2 als Pulver oder als Granulat zugegeben. Das reaktive Additiv 4 kann dem schmelzbaren Ausgangsstoff 3 bereits in der Aufgabevorrichtung 16 zugegeben werden. Wenn mittels der Nebenschmelzvorrichtung 2 ein Masterbatch verarbeitet wird, kann das reaktive Additiv 4 im Masterbatch enthalten sein.

Gemäss eines Ausführungsbeispiels beträgt das Dosierverhältnis der zweiten Schmelze 12 zur ersten Schmelze 11 weniger als 1 zu 10. Gemäss eines Ausführungsbeispiels beträgt das Dosierverhältnis weniger als 1:20. Gemäss eines Ausführungsbeispiels beträgt das Dosierverhältnis weniger als 1:50.

Gemäss des in Fig. 3 dargestellten Ausführungsbeispiels wird die additivhaltige zweite Schmelze 14 der ersten Schmelze 11 in der Hauptschmelzvorrichtung 1 zugegeben. Insbesondere kann eine chemische Reaktion des reaktiven Additivs 4 teilweise in der Nebenschmelzvorrichtung 2 erfolgen. Insbesondere kann die additivhaltige zweite Schmelze 14 zumindest in einem Abschnitt der Nebenschmelzvorrichtung 2 eine höhere Temperatur als 160 Grad Celsius erreichen. Gemäss eines Ausführungsbeispiels kann die additivhaltige zweite Schmelze 14 zumindest in einem Abschnitt der Nebenschmelzvorrichtung 2 eine höhere Temperatur als 180 Grad Celsius erreichen. Gemäss eines Ausführungsbeispiels kann die additivhaltige zweite Schmelze 14 zumindest in einem Abschnitt der Nebenschmelzvorrichtung 2 eine höhere Temperatur als 200 Grad Celsius erreichen. Die Temperatur der additivhaltigen zweiten Schmelze 14 kann höher als die Temperatur der ersten Schmelze 11 sein, bevor die erste Schmelze 11 und die zweite Schmelze 12 oder die additivhaltige zweite Schmelze 14 gemischt werden.

Gemäss des vorliegenden Ausführungsbeispiels ist eine optionale erste Kühlvorrichtung 9 stromabwärts der Hauptschmelzvorrichtung 1 angeordnet. Zusätzlich kann, wie in Fig. 1, eine erste Mischvorrichtung 7 vorgesehen sein, was zeichnerisch nicht dargestellt ist. Zudem kann, wie im in Fig. 1 dargestellten Ausführungsbeispiel, eine optionale zweite Mischvorrichtung 8 und eine optionale zweite Kühlvorrichtung 19 zwischen der Nebenschmelzvorrichtung 2 und der Hauptschmelzvorrichtung 1 angeordnet sein, sodass die additivhaltige zweite Schmelze 14 gemischt oder gekühlt werden kann, bevor sie mit der ersten Schmelze 11 in Kontakt gebracht wird.

Alternativ kann gemäss eines nicht dargestellten Ausführungsbeispiels ein physikalisches Treibmittel in der Hauptschmelzvorrichtung 1 oder stromabwärts der Hauptschmelzvorrichtung 1 zudosiert werden.

Für den Fachmann ist offensichtlich, dass viele weitere Varianten zusätzlich zu den beschriebenen Verfahrensvarianten möglich sind, ohne vom erfinderischen Konzept abzuweichen. Der Gegenstand der Erfindung wird somit durch die vorangehende Beschreibung nicht eingeschränkt und ist durch den Schutzbereich bestimmt, der durch die Ansprüche festgelegt ist. Für die Interpretation der Ansprüche oder der Beschreibung ist die breitest mögliche Lesart der Ansprüche massgeblich. Insbesondere sollen die Begriffe "enthalten" oder "beinhalten" derart interpretiert werden, dass sie sich auf Elemente, Komponenten oder Schritte in einer nichtausschliesslichen Bedeutung beziehen, wodurch angedeutet werden soll, dass die Elemente, Komponenten oder Schritte vorhanden sein können oder genutzt werden können, dass sie mit anderen Elementen, Komponenten oder Schritten kombiniert werden können, die nicht explizit erwähnt sind. Wenn die Ansprüche sich auf ein Element oder eine Komponente aus einer Gruppe beziehen, die aus A, B, C bis N Elementen oder Komponenten bestehen kann, soll diese Formulierung derart interpretiert werden, dass nur ein einziges Element dieser Gruppe erforderlich ist, und nicht eine Kombination von A und N, B und N oder irgendeiner anderen Kombination von zwei oder mehr Elementen oder Komponenten dieser Gruppe.

## Patentansprüche

1. Verfahren zur Herstellung eines geschäumten Extrudats, enthaltend eine Hauptschmelzvorrichtung (1) und eine Nebenschmelzvorrichtung (2), wobei in der Hauptschmelzvorrichtung (1) eine erste Schmelze (11) erzeugt wird, wobei in der Nebenschmelzvorrichtung (2) eine zweite Schmelze (12) aus einem schmelzbaren Ausgangsstoff (3) erzeugt wird, wobei dem schmelzbaren Ausgangsstoff (3) zumindest ein reaktives Additiv (4) aus der Gruppe bestehend aus einem chemischen Treibmittel und einem aktiven Nukleierungsmittel zugegeben wird oder das reaktive Additiv (4) im schmelzbaren Ausgangsstoff (3) enthalten ist, wobei der schmelzbare Ausgangsstoff (3) und das reaktive Additiv (4) in der Nebenschmelzvorrichtung (2) zu der zweiten Schmelze (12) aufgeschmolzen werden, sodass in der Nebenschmelzvorrichtung (2) eine das reaktive Additiv (4) enthaltende additivhaltige zweite Schmelze (14) erhalten wird, welche der in der Hauptschmelzvorrichtung (1) erzeugten ersten Schmelze (11) zugemischt wird.

2. Verfahren nach Anspruch 1, wobei die Nebenschmelzvorrichtung (2) als Einschneckenextruder ausgebildet ist.

3. Verfahren nach einem der Ansprüche 1 oder 2, wobei der schmelzbare Ausgangsstoff (3) der Nebenschmelzvorrichtung (2) über eine Aufgabevorrichtung (16) als Pulver oder als Granulat zugegeben wird.

4. Verfahren nach einem der vorhergehenden Ansprüche, wobei das reaktive Additiv (4) als Pulver, Granulat oder als Masterbatch zugegeben wird.

5. Verfahren nach einem der vorhergehenden Ansprüche, wobei ein Dosierverhältnis der zweiten Schmelze (12) zur ersten Schmelze (11) weniger als 1 zu 10 beträgt.

6. Verfahren nach einem der vorhergehenden Ansprüche, wobei die additivhaltige zweite Schmelze (14) der ersten Schmelze (11) in der Hauptschmelzvorrichtung (1) oder stromabwärts der Hauptschmelzvorrichtung (1) zugegeben wird.

7. Verfahren nach einem der vorhergehenden Ansprüche, wobei die Hauptschmelzvorrichtung (1) eine Entgasungsöffnung (13) enthält, wobei die additivhaltige zweite Schmelze (14) stromabwärts der Entgasungsöffnung (13) zugegeben wird.

8. Verfahren nach einem der vorhergehenden Ansprüche, wobei eine chemische Reaktion des reaktiven Additivs (4) teilweise in der Nebenschmelzvorrichtung (2) erfolgt.

9. Verfahren nach einem der vorhergehenden Ansprüche, wobei die Temperatur der zweiten Schmelze (12) oder der additivhaltigen zweiten Schmelze (14) in der Nebenschmelzvorrichtung (2) zumindest in einem Abschnitt der Nebenschmelzvorrichtung (2) einen Wert erreicht, der über 160° Celsius beträgt.

10. Verfahren nach einem der vorhergehenden Ansprüche, wobei die Temperatur der zweiten Schmelze (12) oder der additivhaltigen zweiten Schmelze (14) höher ist als die Temperatur der ersten Schmelze (11), bevor die erste Schmelze (11) und die additivhaltige zweite Schmelze (14) gemischt werden.

11. Verfahren nach einem der vorhergehenden Ansprüche, wobei zumindest ein Element aus einer Gruppe bestehend aus einer ersten Mischvorrichtung (7) und einer ersten Kühlvorrichtung (9) stromabwärts der Hauptschmelzvorrichtung (1) angeordnet ist.

12. Verfahren nach einem der vorhergehenden Ansprüche, wobei zumindest ein Element aus einer Gruppe bestehend aus einer zweiten Mischvorrichtung (8) und einer zweiten Kühlvorrichtung (19) zwischen der Nebenschmelzvorrichtung (2) und der Zugabe in die erste Schmelze angeordnet ist, sodass die additivhaltige zweite Schmelze (14) gemischt oder gekühlt werden kann, bevor sie mit der ersten Schmelze (11) in Kontakt gebracht wird.

13. Verfahren nach einem der vorhergehenden Ansprüche, wobei das aktive Nukleierungsmittel zumindest eine Substanz aus der Gruppe bestehend aus Natriumbicarbonat, Zitronensäure und Zitronensäurederivat, enthält.

14. Verfahren nach einem der vorhergehenden Ansprüche, wobei eine Dosiermenge des reaktiven Additivs durch eine Drehzahl einer in der Nebenschmelzvorrichtung (2) angeordneten drehbaren Fördervorrichtung gesteuert wird.

15. Verfahren nach einem der vorhergehenden Ansprüche, wobei eine Drehzahl des Nebenschmelzvorrichtung durch eine durchsatzabhängige Stellgrösse der Hauptschmelzvorrichtung (1) geregelt wird.

## Claims

1. A method for producing a foamed extrudate, comprising a main melting device (1) and an auxiliary melting device (2), wherein a first melt (11) is generated in the main melting device (1), wherein a second melt (12) is generated in the auxiliary melting device (2) from a meltable starting material (3), wherein at least one reactive additive (4) is added to the meltable starting material (3) the at least one reactive additive (4) being selected from the group consisting of a chemical blowing agent and an active nucleating agent, or the reactive additive (4) is contained in the meltable starting material (3), wherein the meltable starting material (3) and the reactive additive (4) are melted in the auxiliary melting device (2) to form the second melt (12), so that an additive-containing second melt (14) containing the reactive additive (4) is obtained in the auxiliary melting device (2), which is added to the first melt (11) produced in the main melting device (1).

2. The method of claim 1, wherein the auxiliary melting device (2) is configured as a single-screw extruder.

3. The method of one of claims 1 or 2, wherein the meltable starting material (3) of the auxiliary melting device (2) is added via a feed device (16) as a powder or as a granulate.

4. The method of one of the preceding claims, wherein the reactive additive (4) is added as a powder, a granulate or as a masterbatch.

5. The method of one of the preceding claims, wherein a metering ratio of the second melt (12) to the first melt (11) is less than 1 to 10.

6. The method of one of the preceding claims, wherein the additive-containing second melt (14) is added to the first melt (11) in the main melting device (1) or downstream of the main melting device (1).

7. The method of one of the preceding claims, wherein the main melting device (1) contains a degassing opening (13), wherein the additive-containing second melt (14) is added downstream of the degassing opening (13).

8. The method of one of the preceding claims, wherein a chemical reaction of the reactive additive (4) takes place partially in the auxiliary melting device (2).

9. The method of one of the preceding claims, wherein the temperature of the second melt (12) or the additive-containing second melt (14) in the auxiliary melting device (2) reaches a value of more than 160 degrees Celsius at least in a section of the auxiliary melting device (2).

10. The method of one of the preceding claims, wherein the temperature of the second melt (12) or the additive-containing second melt (14) is higher than the temperature of the first melt (11) before the first melt (11) and the additive-containing second melt (14) are mixed.

11. The method of one of the preceding claims, wherein at least one element from a group consisting of a first mixing device (7) and a first cooling device (9) is arranged downstream of the main melting device (1).

12. The method of one of the preceding claims, wherein at least one element from a group consisting of a second mixing device (8) and a second cooling device (19) is arranged between the auxiliary melting device (2) and the feed to the first melt, so that the additive-containing second melt (14) can be mixed or cooled before it is brought into contact with the first melt (11).

13. The method of one of the preceding claims, wherein the active nucleating agent contains at least one substance from the group consisting of a sodium bicarbonate, a citric acid, and a citric acid derivative.

14. The method of one of the preceding claims, wherein a metered amount of the reactive additive is controlled by an angular velocity of a rotatable conveying device arranged in the auxiliary melting device (2).

15. The method of one of the preceding claims, wherein an angular velocity of a rotatable conveying device of the auxiliary melting device is regulated by a throughput-dependent set variable of the main melting device (1).

## Revendications

1. Méthode fabrication d'un extrudat expansé, contenant un dispositif de fusion principal (1) et un dispositif de fusion secondaire (2), une première masse fondue (11) étant produite dans le dispositif de fusion principal (1), une deuxième masse fondue (12) étant produite dans le dispositif de fusion secondaire (2) à partir d'une matière première fusible (3), au moins un additif réactif (4) du groupe constitué d'un agent moussant chimique et d'un agent de nucléation actif étant ajouté à la matière première fusible (3) ou l'additif réactif (4) étant contenu dans la matière première fusible (3), la matière première fusible (3) et l'additif réactif (4) étant fondus dans le dispositif de fusion secondaire (2) pour former la deuxième masse fondue (12), de sorte qu'on obtient dans le dispositif de fusion secondaire (2) une deuxième masse fondue (14) contenant l'additif réactif (4), qui est mélangée à la première masse fondue (11) produite dans le dispositif de fusion principal (1).

2. Méthode selon la revendication 1, dans laquelle le dispositif de fusion secondaire (2) est conçu comme une extrudeuse à une vis.

3. Méthode selon l'une des revendications 1 ou 2, dans laquelle la matière première fusible (3) est ajoutée au dispositif de fusion secondaire (2) sous forme de poudre ou de granulés par l'intermédiaire d'un dispositif d'alimentation (16).

4. Méthode selon l'une des revendications précédentes, dans laquelle l'additif réactif (4) est ajouté sous forme de poudre, de granulés ou de mélange-maître.

5. Méthode selon l'une quelconque des revendications précédentes, dans laquelle un rapport de dosage de la deuxième masse fondue (12) par rapport à la première masse fondue (11) est inférieur à 1 à 10.

6. Méthode selon l'une quelconque des revendications précédentes, dans laquelle la deuxième masse fondue (14) contenant l'additif est ajoutée à la première masse fondue (11) dans le dispositif de fusion principal (1) ou en aval du dispositif de fusion principal (1).

7. Méthode selon l'une quelconque des revendications précédentes, dans laquelle le dispositif de fusion principal (1) comprend un orifice de dégazage (13), la deuxième matière fondue (14) contenant l'additif étant ajoutée en aval de l'orifice de dégazage (13).

8. Méthode selon l'une quelconque des revendications précédentes, dans laquelle une réaction chimique de l'additif réactif (4) est partiellement réalisée dans le dispositif de fusion secondaire (2).

9. Méthode selon l'une quelconque des revendications précédentes, dans laquelle la température de la deuxième masse fondue (12) ou de la deuxième masse fondue contenant l'additif (14) dans le dispositif de fusion secondaire (2) atteint une valeur qui est supérieure à 160° Celsius au moins dans une partie du dispositif de fusion secondaire (2).

10. Méthode selon l'une quelconque des revendications précédentes, dans laquelle la température de la deuxième masse fondue (12) ou de la deuxième masse fondue (14) contenant l'additif est supérieure à la température de la première masse fondue (11) avant que la première masse fondue (11) et la deuxième masse fondue (14) contenant des additifs ne soient mélangées.

11. Méthode selon l'une quelconque des revendications précédentes, dans laquelle au moins un élément d'un groupe constitué d'un premier dispositif de mélange (7) et d'un premier dispositif de refroidissement (9) est disposé en aval du dispositif de fusion principal (1).

12. Méthode selon l'une quelconque des revendications précédentes, dans laquelle au moins un élément d'un groupe constitué d'un deuxième dispositif de mélange (8) et d'un deuxième dispositif de refroidissement (19) est disposé entre le dispositif de fusion secondaire (2) et l'addition dans la première masse fondue, de sorte que la deuxième masse fondue (14) contenant l'additif peut être mélangée ou refroidie avant d'être mise en contact avec la première masse fondue (11).

13. Méthode selon l'une quelconque des revendications précédentes, dans laquelle l'agent de nucléation actif comprend au moins une substance choisie dans le groupe constitué par le bicarbonate de sodium, l'acide citrique et un dérivé de l'acide citrique.

14. Méthode selon l'une quelconque des revendications précédentes, dans laquelle une quantité de dosage de l'additif réactif est commandée par une vitesse de rotation d'un dispositif de transport rotatif disposé dans le dispositif de fusion secondaire (2).

15. Méthode selon l'une des revendications précédentes, dans laquelle une vitesse de rotation du dispositif de fusion secondaire est régulée par une grandeur de réglage du dispositif de fusion principal (1) qui dépend du débit.
